# EUROPEAN PATENT SPECIFICATION

(11) **EP 3 402 310 B1**
(45) Date of publication and mention of the grant of the patent: **08.01.2020**
(21) Application number: 17169883.0
(22) Date of filing: 08.05.2017
(51) Int. Cl.: H05B 3/68, H05B 3/74, A47J 27/21, F24C 15/10

(54) **DETECTING SYSTEM FOR A DRY CONDITION OF A VESSEL**
DETEKTIONSSYSTEM EINES TROCKENEN ZUSTANDS EINES TOPFES
SYSTÈME DE DÉTECTION D'UN ÉTAT SEC D'UNE CASSEROLE

(43) Date of publication of application: 14.11.2018
(73) Proprietor: Vestel Elektronik Sanayi ve Ticaret A.S., 45030 Manisa (TR)
(72) Inventor: ÜNVER, Burak, 45030 Manisa (TR); ÖZKÜCÜK, Serhat, 45030 Manisa (TR)
(74) Representative: Ascherl, Andreas

(56) References cited:
- US-A- 5 183 996
- US-A1- 2003 222 076
- US-A1- 2014 057 213
- US-B2- 6 927 366

## Description

This invention refers to a dry condition detection system according to claim 1, an electric cooker according to claim 11, and a method for manufacturing the electric cooker according to claim 12.

### Background of the Invention

In an Electric cooker, electric heating elements (e.g. resistor at resistive electric cooker, coil of copper wire at induction cooker) exist under a ceramic surface. An empty cooking vessel may be placed on surface at initial case or fluid material that exists inside vessel may be evaporated. If electric cooker operates with an empty vessel, it may cause damages on both cooking vessel and cooker appliance. For example, induction cookers operate only with cooking vessels that are made of ferromagnetic material and heating an empty vessel during a long time may affect its magnetic property by damaging bottom surface of vessel. Therefore, it makes cooking vessel useless with induction cooker. In addition, electric cooker may achieve high temperatures while heating the empty cooking vessel. Under high temperatures, electrical components on appliance may be damaged (e.g. burning of coil of copper wire at induction cookers).

US Patent Application US6118104 discloses a method of determining the boil states of a liquid as measured by an acoustic sensor, which measures the acoustic signal generated by the liquid as it is heated. The acoustic signal is smoothed and a first derivative of the acoustic signal is calculated. Also the frequency of the acoustic signal is measured. Derivative inflection points, zero slope points, and acoustic signal frequencies are utilized to determine the pre-simmer, simmer, pre-boil, boil, boil dry, and boil over states of the liquid.

US Patent Application US6384384 discloses a boil dry detection system which detects boil dry conditions in utensils heated on a cooking appliance having at least one energy source disposed under a cooking surface such as a glass-ceramic plate and a controller for controlling the level of power supplied to the energy source. The boil dry detection system includes a temperature sensor for providing a signal representative of the glass-ceramic temperature to the controller. The controller controls the power source in response to the temperature signal so as to prevent the glass-ceramic plate from exceeding a maximum temperature and provides a power signal that is indicative of the level of power being supplied to the energy source. The controller generates an estimate of the first and second derivatives with respect to time of either the temperature signal or the power signal, depending on its operating mode. The controller then produces the cross-correlation of the first and second derivative estimates and provides a boil dry indication when the cross-correlation exceeds a predetermined threshold.

The available prior art detects a dry condition in vessel by using sound and heat measuring methods. However, the dependency on type of cooking vessel is shortcoming of the prior arts. Another shortcoming of the prior art is false positives and non-detection of dry condition due to environmental disturbances due to sound and heat.

### Object of the Invention

It is therefore the object of the present invention is to provide a technique for detection of a dry condition of the vessel when the vessel is placed on an electric cooker.

### Description of the Invention

The before mentioned object is solved by a dry condition detection system according to claim 1, an electric cooker according to claim 11, and a method for manufacturing the electric cooker according to claim 12.

A dry condition detection system for detecting dry condition of a vessel when the vessel is placed on electric cooker, the dry condition detection system comprising a cooking zone integrated to a cooking surface of the electric cooker, the cooking zone is movable, wherein the vessel is to be kept on the cooking zone for cooking contents in the vessel, a rotating mechanism adapted to rotate the cooking zone at a desired angle, which in turn adapted to rotate the vessel at the desired angle, wherein contents of the vessel is adapted to move due to tilting of the vessel, if there are any contents in the vessel, a strain gauge unit adapted to sense movement of the content inside the vessel, if there is any content in the vessel, and to generate a content movement data, a microcontroller adapted to receive the content movement data from the strain gauge unit, process the content movement data and adapted to detect dry condition of the vessel.

This provides for a technique for detecting dry condition of the vessel when the vessel is kept on the cooking zone for cooking contents in the vessel. On tilting the vessel, the content of the vessel starts having movement, and the content still keeps on moving due to principle of inertia, even after the vessel is in stable or non-tilt position for sometime. This movement is captured by the straing gauge unit. In case, if there is no content in the vessel, no movement is captured by the strain gauge unit, and no reading is generated. Microcontroller processes the readings from strain gauge unit, and identifies vessel emptiness or dryness if there is no reading received by the microcontroller unit after the tilt.

Further preferred embodiments are subject-matter of dependent claims and/or of the following specification parts of the invention.

According to a preferred embodiment of the system, the system includes an actuator adapted to actuate the rotating mechanism.

This embodiment is beneficial as it provides an easy way to activate the rotating mechanism, with no or low human efforts. Also, it reduces requirement of any human skills to optimally handle rotating mechanism.

According to a further preferred embodiment of the system, wherein the actuator is connected to the microcontroller, the microcontroller is adapted to send a rotation signal to the actuator, the actuator receives and processes the rotation signal and actuates the rotating mechanism.

This embodiment is helpful, as it helps to regulate actuation of the rotating mechanism, which further reduces requirement of human skills to optimally handle rotating mechanism for detection of empty vessel.

According to another embodiment of the system, wherein the rotating mechanism is adapted to rotate the cooking zone up to one degree.

This embodiment is beneficial, as it provides an optimal range limit for rotating or tilting of the cooking zone to effectively detect vessel on the cooking zone being empty or not, without creating any imbalance in the vessel.

According to a further preferred embodiment of the system, wherein the rotating mechanism is adapted to rotate the cooking zone at a predetermined frequency.

This embodiment is beneficial, as it provides for an optimal time range for repeatedly tilt the cooking zone and hence the vessel. Tilting of the vessel at regular interval is required to identify if there is still content in the vessel or it is consumed due to heating of the vessel, or the vessel is poured out by the user, and again kept on the cooking zone after being emptied. When water is being boiled for long time, the water evaporates, and at one point of time, the complete water content evaporates, if the cooker is not switched off. In such scenario, a regular tracking shall be required if the content is removed. Tracking at regular interval, may also help to identify the content reduction in the vessel, which can be useful for cooking procedure, and reduction of amount or volume of content, may act as an indicator for next steps in cooking recipe.

According to a further preferred embodiment of the system, wherein the rotating mechanism is adapted to rotate the cooking zone at a frequency between 500 millisecond to 1 second.

This embodiment is beneficial, as it provides for an optimal frequency range to be maintained for tilting the cooking zone.

According to a further embodiment of the system, wherein the rotating mechanism is a rod, the rod is coupled to the cooking zone, such that when the rod rotates the cooking zone rotates too.

This embodiment is beneficial, as it provides a simple rotating mechanism for rotating the cooking zone.

According to another embodiment of the system, wherein the rod is placed beneath a vessel surface of the cooking zone, affixed to the surface opposite to the vessel surface and passing through a center of the cooking zone.

This embodiment is beneficial, as it further provides for a simple way to couple the rod to the cooking zone, so that the rod can act both as rotating mechanism, as well as axis of rotation for the cooking zone.

According to a further preferred embodiment of the system, the system includes a memory for storing at least one of the content movement data, and the dry condition of the vessel.

This embodiment is beneficial, as it stores the content movement data and detection score of the empty vessel for future retrieval, which can be used for decision making, calibration, as training data, and various such purposes.

According to a further embodiment of the system, the system includes a processor adapted to receive the content movement data and the detection of the empty vessel from the memory, to process the content movement data and the dry condition of the vessel, and to identify a false positive.

This embodiment is beneficial, as it determines false positives thrown by the system, i.e., when the vessel is empty is detected as not empty, and vice-versa. Once such false positives are known, they alone or along with the content movement data and the detection of the empty vessel can be used for calibrating the system or train the system.

The before mentioned object is also solved by an electric cooker of claim 11, which includes the dry condition detection system according to any of the claims 1 to 10, wherein the cooking zone is part of the electric cooker onto which the vessel is kept for cooking contents of the vessel.

The before mentioned object is also solved by a method of manufacturing of the electric cooker, the method of claim 12. The method for manufacturing an electric cooker having technique for detecting an empty vessel when it is placed on electric cooker comprising steps of:
- providing a cooking zone, which is movable, and integrating it with a cooking surface of the electric cooker, wherein the vessel is to be kept on the cooking zone for cooking contents in the vessel;
- providing a rotating mechanism and coupling the rotating mechanism to the cooking zone, such that the rotating mechanism is adapted to rotate the cooking zone at a desired angle, which in turn adapted to rotate the vessel at the desired angle, wherein contents of the vessel is adapted to move due to tilting of the vessel, if there are any contents in the vessel;
- providing a strain gauge unit and integrating it to the electric cooker, such that the strain gauge unit is adapted to sense movement of the content inside the vessel, if there is any content in the vessel, and to generate a content movement data; and
- providing a microcontroller and coupling the microcontroller to the strain gauge unit, such that the microcontroller is adapted to receive the content movement data from the strain gauge unit, processes the content movement data, and to detect dry condition of the vessel.

According to a further preferred embodiment of the method, the method further includes step of providing an actuator, and coupling the actuator to the rotating mechanism, such that the actuator is adapted to actuate the rotating mechanism for rotating the cooking zone.

According to another embodiment of the method, the method further includes step coupling the actuator to the microcontroller, such that the microcontroller is adapted to send a rotation signal to the actuator, the actuator receives and processes the rotation signal and actuates the rotating mechanism.

According to a further embodiment of the method, wherein the rotating mechanism is a rod which is rotatable, the method further step of placing the rod beneath a vessel surface of the cooking zone, affixing it to the surface opposite to the vessel surface and passing it through a center of the cooking zone, such that when the rod rotates the cooking zone rotates too.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

Fig. 1 shows a vessel kept on an electric cooker according to one embodiment of the invention; and
Fig. 2 shows a dry condition detection system according to the invention.

The present invention focuses on detecting a dry condition of cooking vessel (empty or non-empty) that is placed on a cooking surface by sensing movement of material inside vessel according to the principle of inertia.

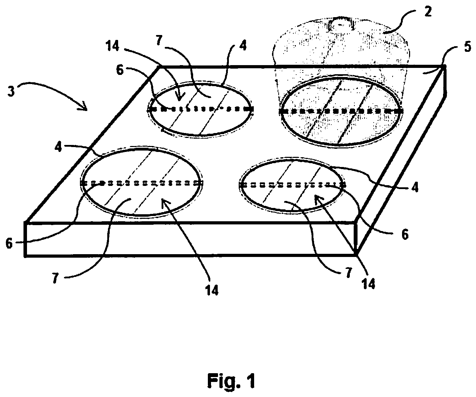

Fig. 1 shows a vessel 2 which is kept on an electric cooker 3. The electric cooker 3 includes a cooking surface 5, which has a cooking zone 4. Cooking zone 4 is the area on the cooking surface 5 onto which the vessel 2 is kept, so that the contents inside the vessel 2 can be cooked or heated. This cooking zone 4 is rotatable around an axis, which is passing through the center of the cooking zone 4. The cooking zone has a vessel surface 14 onto which the vessel 2 is placed. This vessel surface 14 is circular. In one embodiment, this vessel surface 14 need not be circular; rather it may have any symmetrical shape, like oval, square, rectangle etc. However, the circular surface 14 helps in proper balanced movement of the vessel 2, as mostly vessel's surface which touches the cooking zone is circular too. Fig. 1 also shows a strain gauge unit 7, which senses the movement of content in the vessel 2, when the content in the vessel 2 moves due to movement in the vessel 2 effectuated by rotation of the cooking zone 4.

The content in the vessel 4 can be liquid, semi liquid or solid, which moves when the vessel 4 moves. Each type of contents shall have different type of movement when the vessel 2 moves and it depends on density, viscosity, and other physical properties of the contents. The strain gauge unit 7 accordingly senses the movement.

A rod 6 is also shown which runs through the center of the cooking zone 4, and rotates to rotate the cooking zone 4.

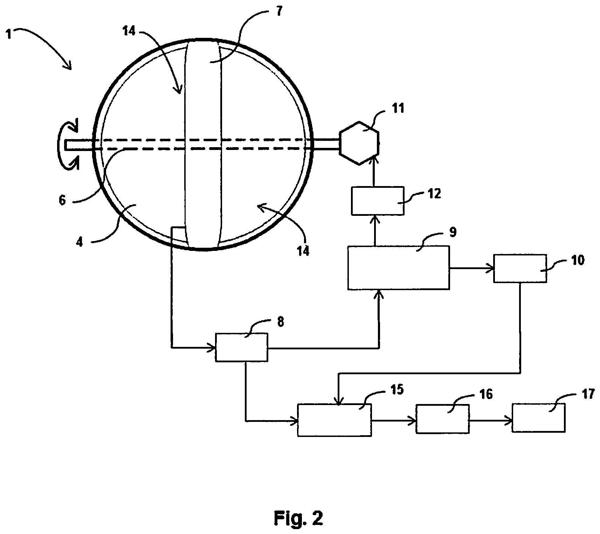

Fig. 2 shows a dry condition detection system 1 which includes a cooking zone 4, a rotating mechanism 6 for rotating the cooking zone 4, a strain gauge unit 7, and a microcontroller 9.

The cooking zone 4 is adapted to be integrated to a cooking surface of an electric cooker. The cooking zone 4 is movable. The vessel 2 is to be kept on the cooking zone 4 for cooking contents in the vessel 2.

The cooking zone 4 is coupled to a rotating mechanism 6. The rotating mechanism 6 rotates the cooking zone 4 at a desired angle. The vessel 2 which can be kept on the cooking zone 4 is adapted to rotate due to rotational movement in the cooking zone 4. The vessel 4 shall rotate almost to same angular movement to which the cooking zone 4. If the angular movement of cooking zone 4 and the vessel 2 shall substantially differ, it may create imbalance of the vessel 2 and hence imbalance in the contents inside the vessel 2, if any. Also, the rotating mechanism 6 shall rotate the cooking zone 4 in a constant motion, so that any abrupt movement of vessel 2 shall be omitted, as abrupt movement results in imbalance in the vessel 2. The content in the vessel 2 moves due to tilting of the vessel 2. If there is no content inside the vessel, there shall be no movement within the vessel 2.

In one embodiment, the rotating mechanism 6 rotates the cooking zone 4 by one degree or less. More than one degree movement of the cooking zone 4 may cause imbalance in the vessel 2, and also may adversely affect the cooking of the contents inside the vessel 2. However, in certain scenario, where the viscosity of the content is high, to create a motion in the contents, the rotating mechanism may rotate the cooking zone 4 at higher degrees, which should be checked to keep the vessel 2 away from imbalance.

In one embodiment, the rotating mechanism 6 rotates the cooking zone 4 at a predetermined frequency, so that vessel 2 can be regularly monitored for dry condition 10. In another embodiment, the rotating mechanism 6 rotates the cooking zone 4 at a frequency between 500 millisecond to 1 second. This shall be especially helpful to keep a very close track of the dry condition 10, so that a quick action can be taken. This shall also be helpful to try to provide inertia to contents inside the vessel 2 whose viscosity is high. In an alternate embodiment, the rotating mechanism 6 need to rotate the vessel 2 only at once, when the dry condition 10 is required to be checked only at the beginning of a cooking operation. In yet another embodiment, the detection of dry condition 10 is not required too frequently, hence the time interval between two rotations shall be higher.

This movement of the content inside the vessel 2 is sensed by the strain gauge unit 7 and it generates a content movement data 8 based on sensing of the content movement inside the vessel 2. In case, there is no movement inside the vessel 2, the strain gauge unit 7 shall not sense the movement, and the data 8 generated shall be nil. And, this shall be the case when the vessel is empty or dry.

The content movement data 8 is further received by a microcontroller 9 which is having data coupling with the strain gauge unit 7. The microcontroller 9 processes the content movement data 8, and detects dry condition 11 of the vessel 2.

The system 1 also includes an actuator 11, which is coupled to the rotating mechanism 6, and actuates the rotating mechanism 6 to rotate. In an alternate embodiment, the actuator 11 is not required; rather the rotating mechanism 6 is activated by manual efforts. However, such manual activation requires human skill set to maintain precision of angular movement and further handling the rotating mechanism 6.

The actuator 11 is coupled to the microcontroller 9 for receiving a rotation signal 12, and the actuator 11 processes the rotation signal 12, and actuates the rotation mechanism 6. In one embodiment, there can be two different microcontrollers 11, one for detecting dry condition 10 inside the vessel 2, and other for controlling the actuator 11. In an alternate embodiment, the microcontroller 11 need not be connected to the actuator 11, rather the actuator 11 is manually handled, where a user of the electric cooker 3 can manually switch on or switch off electrical power to the actuator 11, for activating the rotating mechanism 6 or stopping the rotating mechanism 6.

The rotating mechanism 6 is a rod which is rotatable. The rod 6 is coupled to the cooking zone 4, such that when the rod 6 rotates, the cooking zone 4 rotates too. In an alternate embodiment, the rotating mechanism 6 can be having any other means of electrical, magnetic or mechanical where the rod serves only as axis for rotating the cooking zone 4, and not by itself means for rotating the cooking zone 4.

The rod 6 is placed beneath a vessel surface 14 of the cooking zone 4, affixed to a surface opposite to the vessel surface 14 and passing through a center of the cooking zone 4. The rod 6 is removable fixed to the surface opposite to the vessel surface 14. This shall help in maintenance and replacement in the electric cooker. In one embodiment, the rod can be coupled in any other way, where it is just acting as rotating mechanism 6, and not the axis of rotation for the cooking zone 4.

The present invention provides for detection of dry condition in a vessel 2, when vessel 2 is kept on electric cooker 3. In our system 1 we can detect the empty vessel 2 with using mechanical actuating and sensing reflection behavior of vessel 2. The dry condition detection system 1 includes a cooking zone 4 integrated to a cooking surface 5 of the electric cooker 3, the cooking zone 4 is movable, wherein the vessel 2 is to be kept on the cooking zone 4 for cooking contents in the vessel 2, a rotating mechanism 6 adapted to rotate the cooking zone 4 at a desired angle, which in turn adapted to rotate the vessel 2 at the desired angle, wherein contents of the vessel 2 is adapted to move due to tilting of the vessel 2, if there are any content in the vessel 2, a strain gauge unit 7 adapted to sense movement of the content inside the vessel 2, if there is any content in the vessel 2, and to generate a content movement data 8, and a microcontroller 9 adapted to receive the content movement data 8 from the strain gauge unit 7, and adapted to detect 10 whether the vessel 2 is empty or not.

Thus a dry condition detection system 1 according to the invention is described for detecting an empty vessel 2 when the vessel 2 is placed on electric cooker 3, the dry condition detection system 1 comprising a cooking zone 4 integrated to a cooking surface 5 of the electric cooker 3, the cooking zone 4 is movable, wherein the vessel 2 is to be kept on the cooking zone 4 for cooking contents in the vessel 2, a rotating mechanism 6 adapted to rotate the cooking zone 4 at a desired angle, which in turn adapted to rotate the vessel 2 at the desired angle, wherein contents of the vessel 2 is adapted to move due to tilting of the vessel 2, if there are any content in the vessel 2, a strain gauge unit 7 adapted to sense movement of the content inside the vessel 2, if there is any content in the vessel 2, and to generate a content movement data 8, and a microcontroller 9 adapted to receive the content movement data 8 from the strain gauge unit 7, and adapted to detect dry condition 10 of the vessel 2.

### List of reference numbers

- 1: dry condition detection system
- 2: vessel
- 3: electric cooker
- 4: cooking zone
- 5: cooking surface
- 6: rotating mechanism, rod
- 7: strain gauge unit
- 8: content movement data
- 9: microcontroller
- 10: dry condition
- 11: actuator
- 12: rotation signal
- 14: vessel surface of cooking zone
- 15: memory
- 16: processor
- 17: false positive

## Claims

1. A dry condition detection system (1) for detecting a dry condition (10) of a vessel (2) when the vessel (2) is placed on an electric cooker (3), the dry condition detection system (1) comprising:
- a cooking zone (4) integrated to a cooking surface (5) of the electric cooker (3), **characterized in that** the cooking zone (4) is movable, wherein the vessel (2) is to be kept on the cooking zone (4) for cooking contents in the vessel (2);
- a rotating mechanism (6) is adapted to rotate the cooking zone (4) at a desired angle, which in turn is adapted to rotate the vessel (2) at the desired angle, wherein contents of the vessel (2) is adapted to move due to tilting of the vessel (2), if there are any content in the vessel (2);
- a strain gauge unit (7) is adapted to sense movement of the content inside the vessel (2), if there is any content in the vessel (2), and to generate a content movement data (8); and
- a microcontroller (9) is adapted to receive the content movement data (8) from the strain gauge unit (7), processes the content movement data (8) and is adapted to detect the dry condition (10) of the vessel (2).

2. The dry condition detection system (1) according to claim 1 comprising:
- an actuator (11) adapted to actuate the rotating mechanism (6).

3. The dry condition detection system (1) according to claim 2, wherein the actuator (11) is connected to the microcontroller (9), the microcontroller (9) is adapted to send a rotation signal (12) to the actuator (11), the actuator (11) receives and processes the rotation signal (12) and actuates the rotating mechanism (6).

4. The dry condition detection system (1) according to any of the claims 1 to 3, wherein the rotating mechanism (6) is adapted to rotate the cooking zone (4) up to one degree.

5. The dry condition detection system (1) according to any of the claims 1 to 4, wherein the rotating mechanism (6) is adapted to rotate the cooking zone (4) at a predetermined frequency.

6. The dry condition detection system (1) according to the claim 5, wherein the rotating mechanism (6) is adapted to rotate the cooking zone (4) at a frequency between 500 millisecond to 1 second.

7. The dry condition detection system (1) according to any of the claims 1 to 6, wherein the rotating mechanism (6) is a rod (6), the rod (6) is coupled to the cooking zone (4), such that when the rod (6) rotates, the cooking zone (4) rotates too.

8. The dry condition detection system (1) according to claim 7, wherein the rod (6) is placed beneath a vessel surface (14) of the cooking zone (4), affixed to a surface opposite to the vessel surface (14) and passing through a center of the cooking zone (4).

9. The dry condition detection system (1) according to claim 8 comprising:
- a memory (15) for storing at least one of the content movement data (8), and the dry condition (10) of the vessel (2).

10. The dry condition detection system (1) according to the claim 9 comprising:
- a processor (16) adapted to receive the content movement data (8) and the detection (10) of the empty vessel (2) from the memory (15), to process the content movement data (8) and the dry condition (10) of the vessel (2), and to identify a false positive (17).

11. An electric cooker (3) comprising the dry condition detection system (1) according to any of the claims 1 to 10, wherein the cooking zone (4) is part of the electric cooker (2) onto which the vessel (2) is kept for cooking contents of the vessel (2).

12. A method for manufacturing an electric cooker (3) having a technique for detecting a dry condition (10) of a vessel (2) when it is placed on an electric cooker (3), the method comprising:
- providing a cooking zone (4), which is movable, and integrating it with a cooking surface (5) of the electric cooker (3), wherein the vessel (2) is to be kept on the cooking zone (4) for cooking contents in the vessel (2);
- providing a rotating mechanism (6) and coupling the rotating mechanism (6) to the cooking zone (4), such that the rotating mechanism (6) is adapted to rotate the cooking zone (4) at a desired angle, which in turn adapted to rotate the vessel (2) at the desired angle, wherein content of the vessel (2) is adapted to move due to tilting of the vessel (2), if there are any contents in the vessel (2);
- providing a strain gauge unit (7) and integrating it to the electric cooker (3), such that the strain gauge unit (7) is adapted to sense movement of the content inside the vessel (2), if there is any content in the vessel (2), and to generate a content movement data (8); and
- providing a microcontroller (9) and coupling the microcontroller (9) to the strain gauge unit (7), such that the microcontroller (9) is adapted to receive the content movement data (8) from the strain gauge unit (7), process the content movement data (8), and to detect dry condition (10) of the vessel (2).

13. The method according to claim 12 comprising:
- providing an actuator (11), and coupling the actuator (11) to the rotating mechanism (6), such that the actuator (11) is adapted to actuate the rotating mechanism (6) for rotating the cooking zone (4).

14. The method according to claims 13 comprising:
- coupling the actuator (11) to the microcontroller (9), such that the microcontroller (9) is adapted to send a rotation signal (12) to the actuator (11), the actuator (11) receives and processes the rotation signal (12) and actuates the rotating mechanism (6).

15. The method according to any of the claims 12 to 14, wherein the rotating mechanism (6) is a rod (6) which is rotatable, the method comprising:
- placing the rod (6) beneath a vessel surface (14) of the cooking zone (4), affixing it to the surface opposite to the vessel surface (14) and passing it through a center of the cooking zone (4), such that when the rod (6) rotates the cooking zone (4) rotates too.

## Patentansprüche

1. Trockenzustand-Erfassungssystem (1) zum Erfassen eines Trockenzustandes (10) eines Behälters (2), wenn der Behälter (2) auf einem Elektrokocher (3) platziert wird, wobei das Trockenzustand-Erfassungssystem (1) umfasst:
- eine Kochzone (4), die in eine Kochfläche (5) des Elektroherdes (3) integriert ist,
**dadurch gekennzeichnet, dass**
die Kochzone (4) beweglich ist, wobei das Gefäß (2) auf der Kochzone (4) für Kochgut im Gefäß (2) zu halten ist;
- ein Drehmechanismus (6) angepasst ist, um die Kochzone (4) in einem gewünschten Winkel zu drehen, der wiederum angepasst ist, um das Gefäß (2) in dem gewünschten Winkel zu drehen, wobei der Inhalt des Gefäßes (2) angepasst ist, um sich aufgrund der Neigung des Gefäßes (2) zu bewegen, wenn ein Inhalt in dem Gefäß (2) vorhanden ist;
- eine Dehnungsmessstreifeneinheit (7) angepasst ist, um die Bewegung des Inhalts innerhalb des Gefäßes (2) zu erfassen, wenn ein Inhalt in dem Gefäß (2) vorhanden ist, und um Inhaltsbewegungsdaten (8) zu erzeugen; und
- ein Mikrocontroller (9) angepasst ist, um die Inhaltsbewegungsdaten (8) von der DMS-Einheit (7) zu empfangen, die Inhaltsbewegungsdaten (8) verarbeitet und angepasst ist, um den Trockenzustand (10) des Behälters (2) zu erfassen.

2. Trockenzustandserfassungssystem (1) nach Anspruch 1, umfassend:
- ein Stellglied (11), das angepasst ist, um den Drehmechanismus (6) zu betätigen.

3. Trockenzustandserfassungssystem (1) nach Anspruch 2, wobei das Stellglied (11) mit dem Mikrocontroller (9) verbunden ist, und der Mikrocontroller (9) geeignet ist, ein Rotationssignal (12) an das Stellglied (11) zu senden, wobei das Stellglied (11) das Rotationssignal (12) empfängt und verarbeitet und den Drehmechanismus (6) betätigt.

4. Trockenzustandserfassungssystem (1) nach einem der Ansprüche 1 bis 3, wobei der Drehmechanismus (6) geeignet ist, die Kochzone (4) um bis zu einem Grad zu drehen.

5. Trockenzustandserfassungssystem (1) nach einem der Ansprüche 1 bis 4, wobei der Drehmechanismus (6) angepasst ist, um die Kochzone (4) mit einer vorbestimmten Frequenz zu drehen.

6. Trockenzustandserfassungssystem (1) nach Anspruch 5, wobei der Drehmechanismus (6) angepasst ist, um die Kochzone (4) mit einer Frequenz zwischen 500 Millisekunden und 1 Sekunde zu drehen.

7. Trockenzustandserfassungssystem (1) nach einem der Ansprüche 1 bis 6, wobei der Drehmechanismus (6) eine Stange (6) ist, wobei die Stange (6) mit der Kochzone (4) gekoppelt ist, so dass beim Drehen der Stange (6) auch die Kochzone (4) gedreht wird.

8. Trockenzustandserfassungssystem (1) nach Anspruch 7, wobei die Stange (6) unter einer Behälteroberfläche (14) der Kochzone (4) angeordnet, an einer der Behälteroberfläche (14) gegenüberliegenden Oberfläche befestigt und durch eine Mitte der Kochzone (4) geführt ist.

9. Das Trockenzustandserfassungssystem (1) nach Anspruch 8, umfassend:
- einen Speicher (15) zum Speichern von mindestens einem der Inhaltsbewegungsdaten (8) und dem Trockenzustand (10) des Behälters (2).

10. Das Trockenzustandserfassungssystem (1) nach dem Anspruch 9, umfassend:
- einen Prozessor (16), der angepasst ist, um die Inhaltsbewegungsdaten (8) und die Erfassung (10) des leeren Behälters (2) aus dem Speicher (15) zu empfangen, um die Inhaltsbewegungsdaten (8) und den Trockenzustand (10) des Behälters (2) zu verarbeiten und ein falsches Positiv (17) zu identifizieren.

11. Elektrokocher (3), umfassend das Trockenzustandserfassungssystem (1) nach einem der Ansprüche 1 bis 10, wobei die Kochzone (4) Teil des Elektrokochers (2) ist, auf dem das Gefäß (2) zum Kochen von Inhalten des Gefäßes (2) gehalten wird.

12. Verfahren zur Herstellung eines Elektrokochers (3) mit einer Technik zum Erfassen eines trockenen Zustands (10) eines Gefäßes (2), wenn es auf einen Elektrokocher (3) gestellt wird, wobei das Verfahren umfasst:
- Bereitstellen einer Kochzone (4), die beweglich ist, und Integrieren derselben mit einer Kochfläche (5) des Elektrokochers (3), wobei das Gefäß (2) auf der Kochzone (4) für Kochgut im Gefäß (2) gehalten werden soll;
- Bereitstellen eines Drehmechanismus (6) und Koppeln des Drehmechanismus (6) mit der Kochzone (4), so dass der Drehmechanismus (6) angepasst ist, um die Kochzone (4) in einem gewünschten Winkel zu drehen, der wiederum angepasst ist, um das Gefäß (2) in dem gewünschten Winkel zu drehen, wobei der Inhalt des Gefäßes (2) angepasst ist, um sich aufgrund der Dreh-Bewegung des Gefäßes (2) zu bewegen, wenn es irgendwelche Inhalte in dem Gefäß (2) gibt;
- Bereitstellen einer Dehnungsmessstreifeneinheit (7) und deren Integration in den Elektroherd (3), so dass die Dehnungsmessstreifeneinheit (7) angepasst ist, um die Bewegung des Inhalts innerhalb des Behälters (2) zu erfassen, wenn sich ein Inhalt in dem Behälter (2) befindet, und um Inhaltsbewegungsdaten (8) zu erzeugen; und
- Bereitstellen eines Mikrocontrollers (9) und Koppeln des Mikrocontrollers (9) mit der DMS-Einheit (7), so dass der Mikrocontroller (9) angepasst ist, um die Inhaltsbewegungsdaten (8) von der DMS-Einheit (7) zu empfangen, die Inhaltsbewegungsdaten (8) zu verarbeiten und den Trockenzustand (10) des Behälters (2) zu erfassen.

13. Verfahren nach Anspruch 12, umfassend:
- Bereitstellen eines Stellglieds (11) und Koppeln des Stellglieds (11) mit dem Drehmechanismus (6), so dass das Stellglied (11) angepasst ist, um den Drehmechanismus (6) zum Drehen der Kochzone (4) zu betätigen.

14. Verfahren nach Anspruch 13, umfassend:
- Koppeln des Stellglieds (11) mit dem Mikrocontroller (9), so dass der Mikrocontroller (9) angepasst ist, um ein Rotationssignal (12) an das Stellglied (11) zu senden, wobei das Stellglied (11) das Rotationssignal (12) empfängt und verarbeitet und den Drehmechanismus (6) betätigt.

15. Verfahren nach einem der Ansprüche 12 bis 14, wobei der Drehmechanismus (6) eine Stange (6) ist, die drehbar ist, wobei das Verfahren umfasst:
- Platzieren der Stange (6) unter einer Behälteroberfläche (14) der Kochzone (4), Befestigen an der der Behälteroberfläche (14) gegenüberliegenden Oberfläche und Durchführen durch eine Mitte der Kochzone (4), so dass beim Drehen der Stange (6) auch die Kochzone (4) gedreht wird.

## Revendications

1. Système de détection de condition sèche (1) pour détecter une condition sèche (10) d'un récipient (2) lorsque le récipient (2) est placé sur un cuiseur électrique (3), le système de détection de condition sèche (1) comprenant :
- une zone de cuisson (4) intégrée à une surface de cuisson (5) du cuiseur électrique (3),
**caractérisé en ce que**
la zone de cuisson (4) est mobile, dans laquelle le récipient (2) doit être maintenu sur la zone de cuisson (4) pour cuire des contenus dans le récipient (2) ;
- un mécanisme rotatif (6) est adapté pour faire tourner la zone de cuisson (4) selon un angle souhaité, qui à son tour est adapté pour faire tourner le récipient (2) selon l'angle souhaité, dans lequel le contenu du récipient (2) est adapté pour se déplacer en raison de l'inclinaison du récipient (2), si un contenu existe dans le récipient (2) ;
- une unité à jauge de contrainte (7) est adaptée pour détecter le mouvement du contenu à l'intérieur du récipient (2), s'il y a un contenu dans le récipient (2), et pour générer une donnée de mouvement de contenu (8) ; et
- un microcontrôleur (9) est adapté pour recevoir les données de mouvement de contenu (8) de l'unité de jauge de contrainte (7), traite les données de mouvement de contenu (8) et est adapté pour détecter l'état sec (10) du récipient (2).

2. Système de détection de condition sèche (1) selon la revendication 1, comprenant :
- un actionneur (11) adapté pour actionner le mécanisme rotatif (6).

3. Système de détection d'état sec (1) selon la revendication 2, dans lequel l'actionneur (11) est relié au microcontrôleur (9), le microcontrôleur (9) est adapté pour envoyer un signal de rotation (12) à l'actionneur (11), l'actionneur (11) reçoit et traite le signal de rotation (12) et commande le mécanisme rotatif (6).

4. Système de détection d'état sec (1) selon l'une quelconque des revendications 1 à 3, dans lequel le mécanisme rotatif (6) est adapté pour faire tourner la zone de cuisson (4) jusqu'à un degré.

5. Système de détection de condition sèche (1) selon l'une quelconque des revendications 1 à 4, dans lequel le mécanisme rotatif (6) est adapté pour faire tourner la zone de cuisson (4) à une fréquence prédéterminée.

6. Système de détection de condition sèche (1) selon la revendication 5, dans lequel le mécanisme rotatif (6) est adapté pour faire tourner la zone de cuisson (4) à une fréquence entre 500 millisecondes et 1 seconde.

7. Système de détection d'état sec (1) selon l'une quelconque des revendications 1 à 6, dans lequel le mécanisme rotatif (6) est une tige (6), la tige (6) est couplée à la zone de cuisson (4), de sorte que lorsque la tige (6) tourne, la zone de cuisson (4) tourne également.

8. Système de détection d'état sec (1) selon la revendication 7, dans lequel la tige (6) est placée sous une surface de récipient (14) de la zone de cuisson (4), fixée sur une surface opposée à la surface du récipient (14) et passant par un centre de la zone de cuisson (4).

9. Système de détection d'état sec (1) selon la revendication 8 comprenant :
- une mémoire (15) pour stocker au moins l'une des données de mouvement de contenu (8), et l'état sec (10) de la cuve (2).

10. Système de détection de condition sèche (1) selon la revendication 9 comprenant :
- un processeur (16) adapté pour recevoir les données de mouvement de contenu (8) et la détection (10) du récipient vide (2) depuis la mémoire (15), pour traiter les données de mouvement de contenu (8) et la condition sèche (10) du récipient (2), et pour identifier un faux positif (17).

11. Cuisinière électrique (3) comprenant le système de détection de condition sèche (1) selon l'une quelconque des revendications 1 à 10, dans laquelle la zone de cuisson (4) fait partie de la cuisinière électrique (2) sur laquelle le récipient (2) est conservé pour cuire le contenu du récipient (2).

12. Procédé de fabrication d'une cuisinière électrique (3) ayant une technique pour détecter un état sec (10) d'un récipient (2) lorsqu'il est placé sur une cuisinière électrique (3), le procédé comprenant :
- prévoir une zone de cuisson (4) mobile et l'intégrer à une surface de cuisson (5) de la cuisinière électrique (3), le récipient (2) devant être maintenu sur la zone de cuisson (4) pour cuire le contenu du récipient (2) ;
- prévoir un mécanisme rotatif (6) et coupler le mécanisme rotatif (6) à la zone de cuisson (4), de sorte que le mécanisme rotatif (6) est adapté pour faire tourner la zone de cuisson (4) selon un angle souhaité, qui à son tour est adapté pour faire tourner le récipient (2) selon l'angle souhaité, dans lequel le contenu du récipient (2) est adapté pour bouger en cas de renversement du récipient (2), le contenu de celui-ci se trouvant éventuellement dans le récipient (2) ;
- fournir une unité à jauge de contrainte (7) et l'intégrer à la cuisinière électrique (3), de sorte que l'unité à jauge de contrainte (7) est adaptée pour détecter un mouvement du contenu à l'intérieur du récipient (2), s'il y a un contenu dans le récipient (2), et pour générer une donnée de mouvement de contenu (8) ; et
- fournir un microcontrôleur (9) et coupler le microcontrôleur (9) à l'unité de jauge de contrainte (7), de sorte que le microcontrôleur (9) est adapté pour recevoir les données de mouvement de contenu (8) de l'unité de jauge de contrainte (7), traiter les données de mouvement de contenu (8) et pour détecter un état sec (10) du réservoir (2).

13. Procédé selon la revendication 12 comprenant :
- fournir un actionneur (11), et coupler l'actionneur (11) au mécanisme rotatif (6), de sorte que l'actionneur (11) est adapté pour actionner le mécanisme rotatif (6) pour faire tourner la zone de cuisson (4).

14. Procédé selon la revendication 13 comprenant les étapes consistant à :
- coupler l'actionneur (11) au microcontrôleur (9), de sorte que le microcontrôleur (9) est adapté pour envoyer un signal de rotation (12) à l'actionneur (11), l'actionneur (11) reçoit et traite le signal de rotation (12) et active le mécanisme rotatif (6).

15. Procédé selon l'une quelconque des revendications 12 à 14, dans lequel le mécanisme rotatif (6) est une tige (6) qui peut tourner, le procédé comprenant :
- placer la tige (6) sous une surface de récipient (14) de la zone de cuisson (4), la fixer à la surface opposée à la surface de récipient (14) et la faire passer à travers un centre de la zone de cuisson (4), de sorte que lorsque la tige (6) tourne, la zone de cuisson (4) tourne également.
